# EUROPÄISCHE PATENTSCHRIFT

(11) **EP 4 452 574 B1**
(45) Veröffentlichungstag und Bekanntmachung des Hinweises auf die Patenterteilung: **03.09.2025**
(21) Anmeldenummer: 22829541.6
(22) Anmeldetag: 01.12.2022
(51) Int. Cl.: B25J 15/02, B25J 15/12, B25J 15/00

(54) **GREIFER MIT KRÜMMBAREN FINGERN UND SCHALTMITTEL**
GRIPPER WITH BENDABLE FINGERS AND SWITCHING MEANS
DISPOSITIF DE PRÉHENSION AVEC DOIGTS PLIABLES ET MOYENS DE COMMUTATION

(30) Priorität: 23.12.2021 DE 102021134454
(43) Veröffentlichungstag der Anmeldung: 30.10.2024
(73) Patentinhaber: KUKA Deutschland GmbH, 86165 Augsburg (DE)
(72) Erfinder: RIEDEL, Martin, 86165 Augsburg (DE)
(86) Internationale Anmeldenummer: PCT/EP2022/084042
(87) Internationale Veröffentlichungsnummer: WO 2023/117358

(56) Entgegenhaltungen:
- EP-B1- 3 402 635
- CN-A- 107 471 236
- DE-A1- 102020 207 035
- DE-A1- 102020 207 038
- DE-B3- 102006 009 559
- JP-A- S5 969 288
- US-A1- 2017 105 346

## Beschreibung

Die Erfindung betrifft einen Greifer, aufweisend einen Greifergrundkörper, wenigstens zwei Greiferfinger, von denen wenigstens einer an dem Greifergrundkörper beweglich gelagert ist, und wenigstens einen Antriebsmotor, der ausgebildet ist zum Bewegen des wenigstens einen ihm zugeordneten, am Greifergrundkörper beweglich gelagerten Greiferfingers, wobei der wenigstens eine an dem Greifergrundkörper beweglich gelagerte Greiferfinger eine kinematische Kette von mehreren aufeinander folgenden, gegeneinander verstellbar gelagerten Fingergliedern aufweist, wobei ein in der kinematischen Kette proximales Fingerglied ein Fingerwurzelglied bildet und ein in der kinematischen Kette distales Fingerglied ein Fingerspitzenglied bildet, und wenigstens ein sich entlang der kinematischen Kette der jeweiligen Fingerglieder längserstreckendes Zugmittel vorgesehen ist, das mit dem Fingerspitzenglied verbunden ist und das ausgebildet ist zum Bewegen des am Greifergrundkörper beweglich gelagerten Greiferfingers aus einer Offenstellung in eine Schließstellung des beweglich gelagerten Greiferfingers und zum Krümmen der kinematischen Kette der Fingerglieder des beweglich gelagerten Greiferfingers durch Ziehen an dem Zugmittel.

Die DE 10 2020 207038 A1 beschreibt einen Greifer, aufweisend einen Greifergrundkörper, wenigstens zwei Greiferfinger, von denen wenigstens einer an dem Greifergrundkörper verstellbar gelagert ist und einen am Greifergrundkörper angeordneten Antriebsmotor, der ausgebildet ist zum Bewegen des wenigstens einen an dem Greifergrundkörper verstellbar gelagerten Greiferfinger, wobei jeder an dem Greifergrundkörper verstellbar gelagerte Greiferfinger jeweils mittels wenigstens eines Zugmittels bewegt wird, in das eine Zugkraft durch den Antriebsmotor eingeleitet wird, um den Greifer durch Bewegen des wenigstens einen an dem Greifergrundkörper verstellbar gelagerten Greiferfingers wahlweise zu öffnen oder zu schließen.

Die DE 10 2006 009 559 B3 beschreibt eine Greifervorrichtung in der Art einer künstlichen Hand mit wenigstens zwei an einem Rahmen angebrachten Fingern, von denen zumindest ein Finger längs einer dem Finger zuordenbaren Bewegungsebene mittels eines Aktors aus einer langgestreckten in eine gekrümmte Fingerposition überführbar ist, wobei der Finger einstückig ausgebildet ist und eine Längserstreckung aufweist, längs der wenigstens ein Bereich vorgesehen ist, um den der Finger in der ihm zugeordneten Bewegungsebene krümmbar ist, wobei der wenigstens eine Bereich, um den der Finger in der ihm zugeordneten Bewegungsebene krümmbar ist, gelenkartig ausgebildet ist, dass längs des wenigstens einen aktorisch krümmbaren Fingers ein Zug- und Druckkräfte übertragendes, länglich ausgebildetes Stellelement mit zwei Stellelementenden vorgesehen ist, von denen ein Stellelementende mit einem dem Rahmen gegenüberliegenden Fingerspitzenbereich des Fingers und das andere Stellelementende mit dem Aktor einstückig verbunden sind.

Aufgabe der Erfindung ist es, einen Greifer, der wenigstens einen krümmbaren Greiferfinger aufweist zu verbessern, derart, dass einerseits konvexe Objekte durch Krümmen des wenigstens einen krümmbaren Greiferfingers zuverlässig gegriffen werden können, andererseits aber auch flachwandige Objekte zuverlässig gegriffen werden können, ohne dass sich der wenigstens eine krümmbare Greiferfinger krümmt. Insbesondere soll eine rein mechanisch arbeitende Lösung geschaffen werden, die ohne zusätzliche aktive Antriebe auskommt.

Die Aufgabe wird gelöst durch einen Greifer, aufweisend einen Greifergrundkörper, wenigstens zwei Greiferfinger, von denen wenigstens einer an dem Greifergrundkörper beweglich gelagert ist, und wenigstens einen Antriebsmotor, der ausgebildet ist zum Bewegen des wenigstens einen ihm zugeordneten, am Greifergrundkörper beweglich gelagerten Greiferfingers, wobei der wenigstens eine an dem Greifergrundkörper beweglich gelagerte Greiferfinger eine kinematische Kette von mehreren aufeinander folgenden, gegeneinander verstellbar gelagerten Fingergliedern aufweist, wobei ein in der kinematischen Kette proximales Fingerglied ein Fingerwurzelglied bildet und ein in der kinematischen Kette distales Fingerglied ein Fingerspitzenglied bildet, und wenigstens ein sich entlang der kinematischen Kette der jeweiligen Fingerglieder längserstreckendes Zugmittel vorgesehen ist, das mit dem Fingerspitzenglied verbunden ist und das ausgebildet ist zum Bewegen des am Greifergrundkörper beweglich gelagerten Greiferfingers aus einer Offenstellung in eine Schließstellung des beweglich gelagerten Greiferfingers und zum Krümmen der kinematischen Kette der Fingerglieder des beweglich gelagerten Greiferfingers durch Ziehen an dem Zugmittel, wobei der Greifer ein zwischen einer ersten Schaltstellung und einer zweiten Schaltstellung umschaltbares Schaltmittel aufweist, welches in der ersten Schaltstellung das Zugmittel vollständig freigibt, so dass durch Ziehen an dem Zugmittel der am Greifergrundkörper beweglich gelagerte Greiferfinger sowohl in seine Schließstellung gezogen wird, als auch die kinematische Kette der Fingerglieder des beweglich gelagerten Greiferfingers gekrümmt wird, und welches in der zweiten Schaltstellung einen entlang der kinematischen Kette der Fingerglieder des beweglich gelagerten Greiferfingers laufenden Zugmittelabschnitt des Zugmittels sperrt, so dass durch Ziehen an dem Zugmittel der am Greifergrundkörper beweglich gelagerte Greiferfinger lediglich in seine Schließstellung gezogen wird, ohne dass die kinematische Kette der Fingerglieder des beweglich gelagerten Greiferfingers gekrümmt wird.

Der betreffende Greiferfinger ist beweglich an dem Greifergrundkörper gelagert, beispielsweise linear verstellbar, d.h. entsprechend einem Backengreifer oder schwenkbar verstellbar, d.h. entsprechend einem Zangengreifer. Es kann auch eine kombinierte Bewegung des Greiferfingers vorgesehen sein.

Das Zugmittel läuft ausgehend von einer Greifermitte, d.h. einer zentralen Symmetrieachse des Greifers, entlang dem sich auch der Motor bzw. die Motorwelle oder Spindelwelle des Motors erstreckt, an eines unteren Eintrittsstelle in das Fingerwurzelglied ein, um dort um ca. 90 Grad umgelenkt zu werden, so dass das Zugmittel entlang der Längserstreckung der Fingerglieder des Greiferfingers distal nach oben geführt ist und an dem distalen Fingerspitzenglied festgelegt ist. Durch Ziehen an dem Zugmittel kann demgemäß der Greiferfinger in seine Schließstellung gezogen werden, indem das Zugmittel das Fingerwurzelglied relativ zum Greifergrundkörper verstellt, wobei außerdem der längs des Greiferfingers verlaufende Zugmittelabschnitt des Zugmittels verkürzt wird, so dass sich die Kette der Fingerglieder des Greiferfingers krümmt.

Erfindungsgemäß ist vorgesehen, dass das Schaltmittel dieses Zugmittel oder ein separates zusätzliches Zugmittel im Greiferfinger blockiert bzw. bremst oder klemmt, so dass trotz Ziehen an dem Zugmittel ein Krümmen der Kette der Fingerglieder des Greiferfingers nicht stattfindet, wenn das Schaltmittel sich in seiner zweiten Schaltstellung befindet, jedoch dabei weiterhin durch das Ziehen ein Schließen des Greifers stattfindet.

Im Wesentlichen umfasst das Schaltmittel einen Taster, welcher beim Schließen des Greifers aktiviert wird, wenn der bewegliche Greiferfinger das zu greifende Objekt berührt, und eine Zugmittelklemmeinrichtung, welche das Zugmittel oder ein separates zusätzliches Zugmittel im Greiferfinger blockiert bzw. bremst oder klemmt, um ein Krümmen des Greiferfingers während des Schließens des Greiferfingers zu verhindern, wenn der Taster betätigt ist, d.h. sich das Schaltmittel in der zweiten Schaltstellung befindet.

Das Schaltmittel kann prinzipiell auf unterschiedlichen physikalischen Prinzipien beruhen. Lediglich die Zugmittelklemmeinrichtung muss insoweit mechanisch arbeiten, als dass die Zugmittelklemmeinrichtung ausgebildet ist, das Zugmittel zu arretieren bzw. zu blockieren. Das Schaltmittel, insbesondere der Taster, und das Kopplungsmittel können allgemein betrachtet mechanisch, elektrisch, magnetisch, hydraulisch und/oder pneumatisch arbeiten, bzw. durch eine Kombination aus diesen Arbeitsweisen bestehen, beispielsweise elektromechanisch. So kann der Taster ein Signal liefern, welches beispielsweise elektrisch oder elektronisch an die Zugmittelklemmeinrichtung übermittelt wird. Alternativ oder ergänzend kann eine Kraft oder ein Moment von dem Taster auf die Zugmittelklemmeinrichtung übertragen werden, beispielsweise über eine mechanische Koppel, wie beispielsweise eine Koppelstange oder ein Seil. Die Koppel kann gegebenenfalls jedoch auch magnetisch, hydraulisch und/oder pneumatisch übertragen.

Die Stellung des Tasters ist darüber entscheidend, ob sich der Greiferfinger krümmen kann oder gerade bleibt, wenn er in seine Schließstellung bewegt wird. Auslöseunterscheidung ist dabei jeweils ein stattfindender oder fehlender Kontakt des an dem distalen Fingerglied angeordneten Tasters zum Objekt, das gegriffen werden soll.

Berührt ein Objekt den Greiferfinger am distale Fingerglied als erstes, handelt es sich entweder um ein Objekt, welches im Pinzettengriff gegriffen wird, z.B. ein kleines Objekt, oder ein Objekt, das im Wesentlichen gerade Oberflächenanteile aufweist, so dass diese parallel geklemmt werden können.

Berühren hingegen die Fingermittelglieder als erstes das Objekt, so soll der Greiferfinger gekrümmt werden, um dieses Objekt bestmöglich zu umschließen. Die Krümmung des Greiferfingers ist dabei so lange möglich, bis das distale Fingerspitzenglied bzw. der Taster von dem Objekt berührt wird und der Greiferfinger dann vollständig anliegt. Ab diesem Zeitpunkt werden die Finger im Wesentlichen nur noch zur Mitte hin zusammengedrückt und nicht mehr weiter gekrümmt.

Der jeweilige Greiferfinger verfügt daher über einen mechanischen Taster, schwenkend, schiebend oder anders gelagert, welcher einen Kontakt zum Objekt mechanisch an ein Sperrglied, d.h. die Zugmittelklemmeinrichtung weiterleitet und den Greiferfinger gegen weiteres Krümmen sperrt. Dieser Auslösetaster kann federnd gelagert sein und befindet sich ausgeklappt in einer geöffneten Endstellung befinden.

Das Schaltmittel kann ein antriebsloses Schaltmittel sein, welches einen am Fingerspitzenglied gelagerten mechanischen Taster, eine Zugmittelklemmeinrichtung und ein die Bewegung des mechanischen Tasters auf die Zugmittelklemmeinrichtung übertragendes Kopplungsmittel umfasst, so dass bei einer Betätigung des Tasters die Zugmittelklemmeinrichtung in ihre Klemmstellung bewegt wird, um die zweite Schaltstellung des Schaltmittels einzunehmen.

Das Zugmittel, beispielsweise ein Aktorseil wird in der zweiten Schaltstellung des Schaltmittels auf der Höhe des proximalen Fingerwurzelglieds so von einer Sperre geklemmt, dass die gesamte Seilzugkraft nur auf das proximale Fingerwurzelglied übertragen wird. Dadurch gibt es keine relative Zugkraft zwischen den Fingermittengliedern, die den Greiferfinger auf der Fingervorderseite verkürzen würden. Die Kraft auf die einzelnen Fingermittenglieder wird als Druckkraft über die aufeinanderliegenden Rückseiten übertragen.

Als ein mögliches Ausführungsbeispiel können Auslöser, d.h. der Taster, und Sperre, d.h. die Zugmittelklemmeinrichtung, jeweils als rückgefederte Hebel ausgeführt sein, die über ein Kopplungsmittel, wie beispielsweise ein Zugseil mechanisch verbunden sind. Dabei kann das Kopplungsmittel bzw. das Zugseil vorzugsweise in der neutralen Biegefaser des Greiferfingers geführt werden und erfährt somit keine Längenänderung bei einer Fingerkrümmung. Die Klemmung kann im Bereich einer Umlenkung am Fingerwurzelglied erfolgen.

Die Zugmittelklemmeinrichtung kann an dem Fingerwurzelglied ausgebildet sein und eingerichtet sein, in ihrer Klemmstellung das durch das Fingerwurzelglied führende Zugmittel in der zweiten Schaltstellung des Schaltmittels an dem Fingerwurzelglied zu arretieren.

Die Zugmittelklemmeinrichtung kann in Art eines Klemmkeiles oder einer Bremsbacke ausgebildet sein. Die Zugmittelklemmeinrichtung kann ein Schwenkglied oder eine Schwenkbacke umfassen, welche beispielsweise an dem Fingerwurzelglied schwenkbar gelagert ist. Der so schwenkbar gelagerte Klemmkeil oder die Bremsbacke umfasst dabei eine Klemmfläche, welche in der zweiten Schaltstellung des Schaltmittels gegen das Zugmittel drückt, um das Zugmittel zwischen dem Klemmkeil bzw. der Bremsbacke und einer Gegenhaltung, die fest an dem Fingerwurzelglied ausgebildet ist, einzuklemmen.

Der mechanische Taster kann an dem Fingerspitzenglied schwenkbar gelagert sein und einen ersten Hebel aufweisen, an dem ein distales Ende des Kopplungsmittels angeschlossen ist, wobei ein proximales Ende des Kopplungsmittels an einem zweiten Hebel angeschlossen ist, der an dem Fingerwurzelglied schwenkbar gelagert ist und die Zugmittelklemmeinrichtung trägt.

Das Kopplungsmittel kann beispielsweise eine Koppelstange sein oder eine Koppelseil, welches den ersten Hebel mit dem zweiten Hebel verbindet, so dass der zweite Hebel eine zur Bewegung des ersten Hebels synchrone Bewegung ausführt. Zur Realisierung einer gewissen Übersetzung, können der erste Hebel und der zweite Hebel unterschiedliche wirksame Hebellängen aufweisen. Alternativ können der erste Hebel und der zweite Hebel identisch wirksame Hebellängen aufweisen.

Das Kopplungsmittel kann als ein zweites Zugmittel ausgebildet sein, welches entlang der kinematischen Kette der Fingerglieder des beweglich gelagerten Greiferfingers im Bereich einer neutralen Biegefaser des Greiferfingers vom Fingerspitzenglied zum Fingerwurzelglied geführt ist.

Eine zweite grundlegende Ausführungsform basiert im Gegensatz zu der zuvor beschriebenen Variante auf einer Fixierung der Länge der Greiferfingerrückseite und damit auf einer Verhinderung der Dehnung der Greiferfingerrückseite, um eine Krümmung zu erlauben. Hierbei drückt ein Auslöser, d.h. der Taster bei einem Kontakt mit einem Objekt auf eine Sperre, die ein separates Zugmittel, insbesondere ein separates Seil oder Fixierseil blockiert. Dieses separate Seil verläuft auf der Fingerrückseite, befestigt am proximalen Fingerwurzelglied, über die Fingermittelglieder bis ins distale Fingerspitzenglied, durch welches es bei nichtbetätigtem Auslöser möglichst verlustfrei in einem Bogen um 180 Grad herumgeführt wird. Da sich beim Krümmen des Greiferfingers die Rückseite längt, wird das separate Seil durch das distale Fingerspitzenglied auch auf der Rückseite gezogen. Beim Strecken muss es, relativ gesehen, andersherum wieder aus der Rückseite herausgezogen werden. Um dies zu erreichen, kann das lose Seilende entweder federbetätig auf Spannung gehalten werden oder formschlüssig mit einem Teil des Greifers verbunden sein, um so gespannt gehalten zu werden. Vorzugsweise wird das zweite Ende des Sperrseils ebenfalls am proximalen Fingerwurzelglied befestigt und entlang der Fingervorderseite geführt. Diese Seilführung bewirkt einen ausreichend guten Längenausreich, da die Vorderseite bei Krümmung in der gleichen Größenordnung verkürzt wird, wie die Rückseite gelängt wird. Eine leichte konstruktive Winkelanstellung der Seilführung zur Fingermittelebene (Vorder- und/oder Rückseite des Fingers) kann als Korrekturfaktor genutzt werden, um ggf. das Verhältnis von Stauchung und Dehnung ideal auszulegen.

Die Klemmung bei Betätigung des Auslösers erfolgt im distalen Fingerspitzenglied, vorzugsweise im Wesentlichen auf der Fingervorderseite, indem das Seil zwischen der Sperre und dem distalem Fingerspitzenglied bzw. innerhalb einer Umlenkung im Fingerspitzenglied eingeklemmt wird.

In einer weiteren etwas abgewandelten Ausführungsform wird abweichend zu der soeben beschriebenen Variante das separate Seil nicht als Endpunkt auf der Rückseite des proximalen Fingerwurzelglieds befestigt, sondern dort in einer Schlaufe geführt, sodass ein zur Fingermittelebene symmetrischer Doppelseilaufbau entsteht. Die Funktionsweise und das Prinzip bleiben jedoch vollständig erhalten.

Dazu wird das Abspannmittel ausgehend von dem Fingerwurzelglied von einer Innenseite des Greiferfingers über eine Umlenkung im Fingerspitzenglied auf die Außenseite des Greiferfingers geführt und mittels einer am Fingerwurzelglied ausgebildeten Umlenkung von der Außenseite des Greiferfingers wieder an die Innenseite des Greiferfingers bis an das Fingerwurzelglied zurückgeführt.

Die Zugmittelklemmeinrichtung kann an dem Fingerspitzenglied ausgebildet sein und eingerichtet sein, in ihrer Klemmstellung ein durch das Fingerspitzenglied laufendes Abspannmittel in der zweiten Schaltstellung des Schaltmittels an dem Fingerspitzenglied zu arretieren.

Indem die Zugmittelklemmeinrichtung an dem Fingerspitzenglied ausgebildet ist, können die Komponenten von Taster, Kopplungsmittel und Zugmittelklemmeinrichtung vollständig in das Fingerspitzenglied integriert werden, ohne dass das Kopplungsmittel über mehrere Fingermittenglieder hinweg durch den gesamten Greiferfinger hindurchgeführt werden muss. Das Abspannmittel kann dem krümmbaren Greiferfinger dabei eine zusätzliche Stabilität verleihen.

Das Abspannmittel kann einen am Fingerwurzelglied auf der konvexen Seite der neutralen Biegefaser der kinematischen Kette der Fingerglieder des beweglich gelagerten Greiferfingers verankerten ersten Endabschnitt aufweisen, einen am Fingerwurzelglied auf der konkaven Seite der neutralen Biegefaser der kinematischen Kette der Fingerglieder des beweglich gelagerten Greiferfingers verankerten zweiten Endabschnitt aufweisen und einen vom ersten Endabschnitt am Fingerwurzelglied auf der konkaven Seite des Greiferfingers bis an das Fingerspitzenglied geführten und von dem Fingerspitzenglied auf der konkaven Seite des Greiferfingers wieder zum Fingerwurzelglied zurück geführten Mittenabschnitt aufweisen, der an dem zweiten Endabschnitt am Fingerwurzelglied endet.

Der durch das Fingerspitzenglied geführte Mittenabschnitt des Abspannmittels kann in der ersten Schaltstellung des Schaltmittels zum Durchlaufen des Abspannmittels durch das Fingerspitzenglied freigegeben sein und in der zweiten Schaltstellung des Schaltmittels das Abspannmittel durch die Zugmittelklemmeinrichtung in dem Fingerspitzenglied festgelegt sein.

Das Abspannmittel kann ausgehend von dem Fingerwurzelglied von einer Innenseite des Greiferfingers über eine Umlenkung im Fingerspitzenglied auf die Außenseite des Greiferfingers geführt sein und mittels einer am Fingerwurzelglied ausgebildeten weiteren Umlenkung von der Außenseite des Greiferfingers wieder an die Innenseite des Greiferfingers bis an das Fingerwurzelglied zurückgeführt sein.

Der am Greifergrundkörper beweglich gelagerte Greiferfinger kann linear verschiebbar an dem Greifergrundkörper gelagert sein, wobei ein lineares Verstellen des Greiferfingers relativ zum Greifergrundkörper erfolgt, wenn an dem Zugmittel des beweglich gelagerten Greiferfingers gezogen wird.

Der am Greifergrundkörper beweglich gelagerte Greiferfinger kann schwenkbar an dem Greifergrundkörper gelagert sein, wobei ein schwenkendes Verstellen des Greiferfingers relativ zum Greifergrundkörper erfolgt, wenn an dem Zugmittel des beweglich gelagerten Greiferfingers gezogen wird.

Ein lineares Bewegen des wenigstens einen Greiferfingers oder der mehreren Greiferfinger, insbesondere zweier Greiferfinger kann mit einer schwenkenden Verstellung des Greiferfingers oder der Greiferfinger überlagert sein. Dies bedeutet, dass der wenigstens eine Greiferfinger eine kombinierte Schub-/Schwenkbewegung ausführen kann.

Ein im Wesentlichen lineares Verstellen in Kombination mit einer schwenkenden Bewegungskomponente kann beispielsweise mittels eines Parallelogramm-Gelenks erfolgen, durch das der Greiferfinger an dem Greifergrundkörper gelagert ist.

Eine verstellbare Lagerung des wenigstens einen Greiferfingers, insbesondere von zwei Greiferfingern an dem Greifergrundkörper kann beispielsweise jeweils mittels eines Parallelogramm-Viergelenks erfolgen. In diesem Fall umfasst das Parallelogramm-Viergelenk zwei parallel zueinander angeordnete lange Stäbe und zwei parallel zueinander angeordnete kurze Stäbe, die jeweils durch ein Drehgelenk bzw. ein Schwenkgelenk verbunden sind. Die Stäbe und die Schwenkgelenke können als ein einteiliges Formteil ausgebildet sein. Alternativ kann das Parallelogramm-Viergelenk jedoch beispielsweise auch durch ein einfaches Schwenkgelenk bzw. Drehgelenk oder einer Kombination von Schwenkgelenk und Drehgelenk ersetzt sein.

Der Greifer kann demgemäß einen Greifergrundkörper aufweisen, an dem jeder Greiferfinger über jeweils ein elastisch verformbares Doppelgelenk symmetrisch zur Greifermitte, entlang der Drehachse der Motorwelle des Motors des Greifers, parallel geführt ist. Dabei werden die Greiferfinger zum Greifen zur Greifermitte hin durch ein Zugmittel, wie beispielsweise ein Seil, aktiv zusammengezogen und zum Lösen über separate, antagonistische elastische Bänder, sogenannte Fingerrückstellbänder, wieder passiv nach außen gezogen. Das Zugmittel ist durchgängig zwischen zwei Greiferfingern positioniert. Es greift jeweils am distalen Fingerglied an, wird durch die Fingermittelglieder geführt und am proximalen Fingerglied in einem Winkel von im Wesentlichen 90° so umgelenkt, dass es von einer zentral angeordneten Seilwelle aufgewickelt werden kann, welche auf der Motorwelle sitzt oder durch diese gebildet wird. Wird der Greiferfinger bei einem Kontakt mit einem zu greifenden Objekt gekrümmt, unterstützt beim späteren Loslassen ein elastisches Fingerstreckband die Fingerrückstellung wieder in die Strecklage.

Konkrete Ausführungsbeispiele der Erfindung sind in der nachfolgenden Beschreibung unter Bezugnahme auf die beigefügten Figuren näher erläutert.

Es zeigen:
- Fig. 1: eine perspektivische Darstellung einer beispielhaften Ausführungsform eines Greifers mit einem Seilzugbetätigungsmittel, wobei die Greiferfinger als kinematische Ketten mehrere Glieder und Gelenke ausgebildet sind, die mittels eines Seilzugs als Zugmittel sowohl schließbar als auch krümmbar sind,
- Fig. 2: eine vergrößerte perspektivische Teildarstellung des zentralen Seilzugbetätigungsmittel gemäß Fig. 1,
- Fig. 3: eine schematische Darstellung einer ersten beispielhaften Ausführung eines Schaltmittels in gestreckter Stellung des krümmbaren Greiferfingers bei freigegebenem Zugmittel,
- Fig. 4: eine schematische Darstellung der ersten beispielhaften Ausführung des Schaltmittels gemäß Fig. 3 in gekrümmter Stellung des krümmbaren Greiferfingers bei freigegebenem Zugmittel,
- Fig. 5: eine schematische Darstellung der ersten beispielhaften Ausführung des Schaltmittels gemäß Fig. 3 in gestreckter Stellung des Greiferfingers bei gesperrtem Zugmittel, so dass der Greiferfinger nicht mehr krümmbar ist,
- Fig. 6: eine schematische Darstellung einer konkreten Variante eines Schaltmittels in gestreckter Stellung des krümmbaren Greiferfingers mit Hebeln und einem Kopplungsmittel in der neutralen Biegefaser des Greiferfingers bei freigegebenem Zugmittel,
- Fig. 7: eine schematische Darstellung der konkreten Variante des Schaltmittels gemäß Fig. 6 bei gesperrtem Zugmittel,
- Fig. 8: eine schematische Darstellung einer zweiten beispielhaften Ausführung eines Schaltmittels in gestreckter Stellung des krümmbaren Greiferfingers bei freigegebenem Zugmittel,
- Fig. 9: eine schematische Darstellung der zweiten beispielhaften Ausführung des Schaltmittels gemäß Fig. 8 in gekrümmter Stellung des krümmbaren Greiferfingers bei freigegebenem Zugmittel,
- Fig. 10: eine schematische Darstellung der zweiten beispielhaften Ausführung des Schaltmittels gemäß Fig. 8 in gestreckter Stellung des Greiferfingers bei gesperrtem Zugmittel, so dass der Greiferfinger nicht mehr krümmbar ist,
- Fig. 11: eine schematische Darstellung einer konkreten Variante eines Schaltmittels in gestreckter Stellung des krümmbaren Greiferfingers gemäß Fig. 8 mit einem Kipphebel in einer Freigabestellung,
- Fig. 12: eine schematische Darstellung der konkreten Variante des Schaltmittels gemäß Fig. 11 mit dem Kipphebel in einer Sperrstellung, bei dem das zusätzliche Zugmittel, d.h. das Abspannmittel gesperrt ist, und
- Fig. 13: eine schematische Darstellung einer Abwandlung des Greiferfingers gemäß Fig. 11 und Fig. 12, bei dem das zusätzliche Zugmittel, d.h. das Abspannmittel von einer Innenseite des Greiferfingers über eine Umlenkung im Fingerspitzenglied auf die Außenseite des Greiferfingers geführt ist und mittels einer Umlenkung von der Außenseite des Greiferfingers wieder an die Innenseite des Greiferfingers zurückgeführt ist.

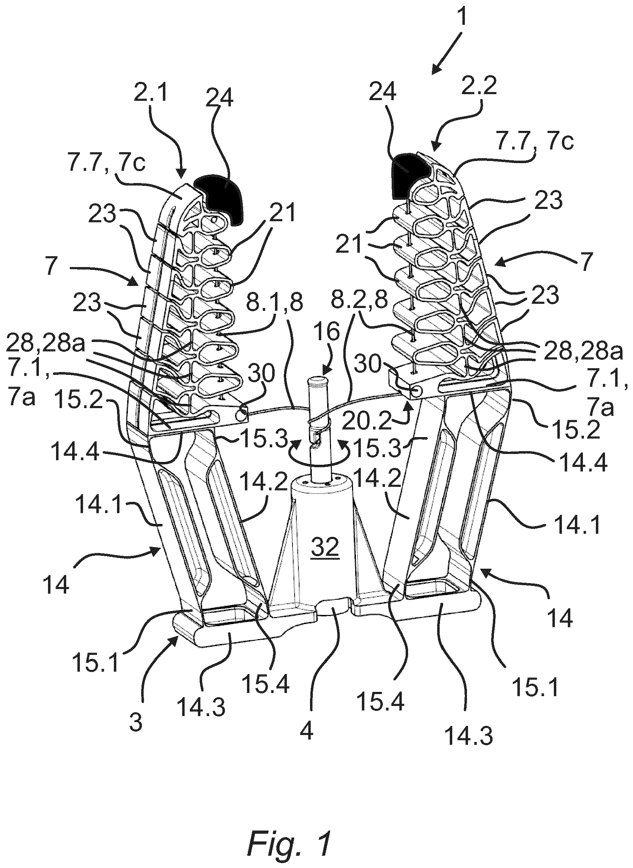

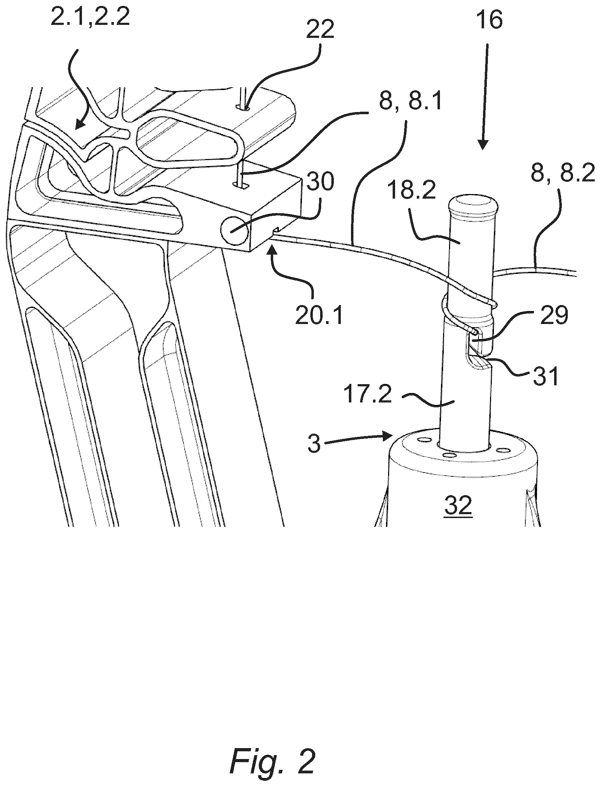

In der Fig. 1 und Fig. 2 ist eine beispielhafte Ausführungsform eines Greifers 1 dargestellt.

Der Greifer 1 weist einen Greifergrundkörper 3 und ein Paar, d.h. zwei Greiferfinger 2.1, 2.2 auf, die an dem Greifergrundkörper 3 jeweils verstellbar gelagert sind.

Die zwei Greiferfinger 2.1, 2.2 sind jeweils mit einer kinematischen Kette von mehreren aufeinander folgenden, gegeneinander verstellbar gelagerten Fingergliedern 7 ausgebildet, von denen jeweils ein in der kinematischen Kette distales Fingerglied 7.7 ein Fingerspitzenglied 7c bildet, wobei jeweils wenigstens ein Abschnitt eines Zugmittels 8.1, 8.2 sich entlang der kinematischen Kette der jeweiligen Fingerglieder 7 längserstreckt, und das jeweilige Zugmittel 8.1, 8.2 mit dem jeweiligen Fingerspitzenglied 7c verbunden ist, so dass bei Einleiten einer Zugkraft in das jeweilige Zugmittel 8.1, 8.2 der entsprechende Greiferfinger 2.1, 2.2 eine Schließbewegung ausführt und die Zugkraft gegebenenfalls gleichzeitig auch ein Krümmen der kinematischen Kette der Fingerglieder 7 bewirken kann.

Die mehreren aufeinander folgenden, gegeneinander verstellbar gelagerten Fingerglieder 7 sind beispielsweise als ein einteiliger Greiferfingerkörper ausgebildet, wobei jeweils zwei benachbarte Fingerglieder 7 über einen filmscharnierartigen Steg 28 verbunden sein können und die mehreren Stege 28 eine sich innerhalb des Greiferfingers 2.1, 2.2 längserstreckende Stützsäule des Greiferfingers 2.1, 2.2 bilden. Diese Steg 28 bzw. die Stützsäule bilden eine neutrale Biegefaser 28a des jeweiligen Greiferfingers 2.1, 2.2.

Jedes Fingerglied 7, mit Ausnahme des proximalen Fingerglieds 7.1, welches ein Fingerwurzelglied 7a bildet, weist einen vorzugsweise elastischen Hohlkörper 21 auf, der jeweils einen Tastkörper bildet, mit dem der Greiferfinger 2.1, 2.2 an einem zu greifenden Objekt berührend anliegen kann. Der jeweilige Hohlkörper 21 kann hohlzylindrisch ausgebildet sein, wobei die Zylinderachsen sich jeweils parallel erstrecken.

Jeder Hohlkörper 21 weist Löcher 22 (Fig. 2) auf, durch welche jeweils eines der Zugmittel 8.1, 8.2 hindurchgefädelt ist. Somit liegen in einem montierten Zustand die ersten Zugmittel 8.1, 8.2 jeweils innerhalb der Kontur der jeweiligen Fingerglieder 7 bzw. innerhalb der Kontur der Hohlkörper 21. Die Hohlkörper 21 erstrecken sich ausgehend von der neutralen Faser 28a, die durch die filmscharnierartigen Stege 28 definiert wird, in Richtung auf das zu greifende Objekt hin, und zwar mit solchen Querschnittskonturen, dass sich die Hohlkörper 21 zum zu greifenden Objekt hin verjüngen. In Folge werden in einem gestreckten Zustand des Greiferfingers 1 zwischen jeweils zwei benachbarten Hohlkörpern 21 Zwischenräume geschaffen, die es ermöglichen, dass sich der Greiferfinger 1 krümmen kann.

Gegenüberliegend der Hohlkörper 21 sind auf der anderen Seite der neutralen Faser 28a bzw. der Stege 28 rückseitige Stützkörper 23 angeformt, welche sich in dem gestreckten Zustand des Greiferfingers 2.1, 2.2 aufeinander abstützen. Dazu weisen die Stützkörper 23 außenseitig angeordnet, flächige druckstabile Stützwandabschnitte auf, welche in dem gestreckten Zustand des Greiferfingers 2.1, 2.2 stirnseitig aneinanderstoßen. Die flächigen, druckstabilen Stützwandabschnitte bilden zusammen mit den filmscharnierartigen Stegen 28, welche die Stützsäule des Greiferfingers 2.1, 2.2 bilden, einen in Öffnungsrichtung biegesteifen Kastenrahmen.

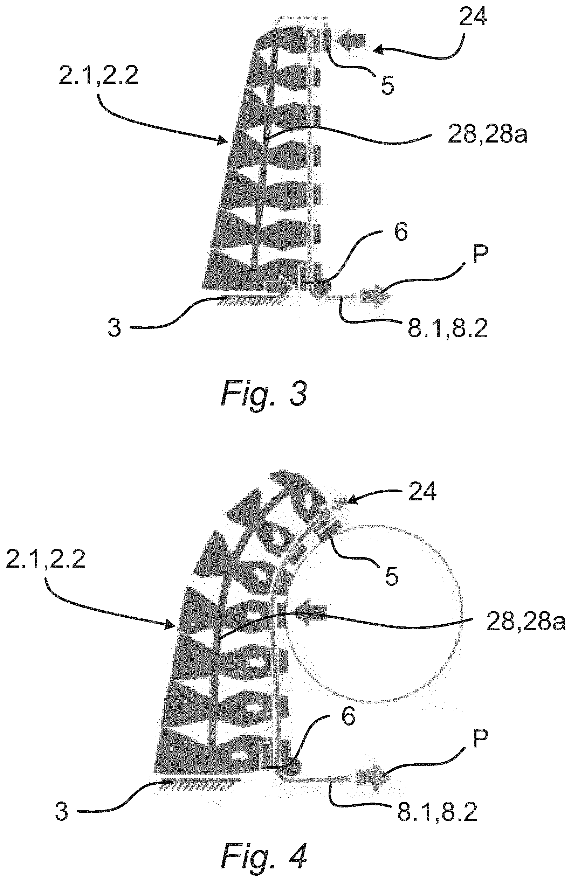

Am jeweiligen oberen Ende jedes Greiferfingers 2.1, 2.2 ist an dem jeweiligen Fingerspitzenglied 7.7 ein erfindungsgemäßes Schaltmittel 24 angeformt. Das Schaltmittel 24 kann unterschiedlich ausgebildet sein und wird im Rahmen der Fig. 3 bis Fig. 12 im Folgenden noch näher erläutert.

Eine verstellbare Lagerung der zwei Greiferfinger 2.1, 2.2 an dem Greifergrundkörper 3 erfolgt beispielsweise wie dargestellt jeweils mittels eines Parallelogramm-Viergelenks 14. Das Parallelogramm-Viergelenk 14 umfasst zwei parallel zueinander angeordnete lange Stäbe 14.1, 14.2 und zwei parallel zueinander angeordnete kurze Stäbe 14.3, 14.4, die jeweils durch ein Drehgelenk bzw. ein Schwenkgelenk 15.1, 15.2, 15.3, 15.4 verbunden sind. Im Falle des vorliegenden Ausführungsbeispiels sind die Stäbe 14.1, 14.2, 14.3, 14.4 und die Schwenkgelenke 15.1, 15.2, 15.3, 15.4 als ein einteiliges Formteil ausgebildet. Alternativ kann das Parallelogramm-Viergelenk 14 jedoch beispielsweise auch durch ein einfaches Schwenkgelenk bzw. Drehgelenk ersetzt sein, das in der gezeigten Ausführungsform jedoch nicht dargestellt ist.

Der Greifer 1 weist einen am Greifergrundkörper 3 angeordneten Antriebsmotor 4 auf, der ausgebildet ist zum Bewegen der wenigstens zwei Greiferfinger 2.1, 2.2, wobei die wenigstens zwei Greiferfinger 2.1, 2.2 beispielsweise jeweils mittels der Zugmittel 8.1, 8.2 bewegt werden. In das jeweilige Zugmittel 8.1, 8.2 kann eine Zugkraft durch den Antriebsmotor 4 eingeleitet werden, um den Greifer 1 durch Bewegen der wenigstens zwei Greiferfinger 2.1, 2.2 wahlweise zu öffnen oder zu schließen, und gegebenenfalls das Krümmen auszuführen.

Der Greifer 1 weist beispielsweise wie dargestellt ein zentrales Seilzugbetätigungsmittel 16 auf. Dieses Seilzugbetätigungsmittel 16 ist in Fig. 2 in einer vergrößerten Teilansicht deutlicher gezeigt.

Das Seilzugbetätigungsmittel 16 ist zwischen den wenigstens zwei Greiferfingern 2.1, 2.2 angeordnet und ist ausgebildet, durch eine Antriebsbewegung des am Greifergrundkörper 3 angeordneten Antriebsmotors 4 die beiden Zugmittel 8.1, 8.2 der beiden Greiferfinger 2.1, 2.2 in Schließrichtung des Greifers 1 von einer Seite ausgehend an das zentrale Seilzugbetätigungsmittel 16 heranzuziehen.

Das zentrale Seilzugbetätigungsmittel 16 gemäß Fig. 1 ist in einer vergrößerten Teilansicht nochmals deutlicher in Fig. 2 dargestellt. Das Seilzugbetätigungsmittel 16 umfasst eine Welle 17.2, die zentral zwischen der einen Greifseite des einen Greiferfingers 2.1 und der anderen Greifseite des anderen Greiferfingers 2.2 angeordnet ist und sich parallel zu den Greifseiten längserstrecken. Die Welle 17.2 ist drehbar am Greifergrundkörper 3 gelagert. Die Welle 17.2 weist eine Mantelwand 18.2 auf, die ausgebildet ist zum gleichzeitigen Aufwickeln des einen Zugmittels 8.1 des einen Greiferfingers 2.1 und des anderen Zugmittel 8.2 des anderen Greiferfingers 2.2, wenn sich die Welle 17.2 in einer Aufwickelrichtung dreht.

Die Mantelwand 18.2 ist im Falle das vorliegenden Ausführungsbeispiels tailliert ausgebildet.

Das Seilzugbetätigungsmittel 16, d.h. im Falle das vorliegenden Ausführungsbeispiels die drehbar am Greifergrundkörper 3 gelagerte Welle 17.2, weist beispielsweise eine Wellendurchgangsbohrung 29 auf, durch welche der Seilzug 8 in Seilzugrichtung hindurchgeführt ist, insbesondere verschiebbar hindurchgeführt ist, wobei der Seilzug 8 zur Betätigung des Paares der zwei gegenüberliegend angeordneten Greiferfinger 2.1, 2.2 ausgebildet ist, indem das eine Ende des Seilzug 8 mit dem einen Greiferfinger 2.1 verbunden ist und das andere Ende des Seilzugs 8 mit dem anderen Greiferfinger 2.2 verbunden ist. Der Seilzug 8 umfasst insoweit das eine Zugmittel 8.1 des einen Greiferfingers 2.1 und das andere Zugmittel 8.2 des anderen Greiferfingers 2.2. Das eine Zugmittel 8.1 des einen Greiferfingers 2.1 und das andere Zugmittel 8.2 des anderen Greiferfingers 2.2 können demgemäß durch einen einzigen Seilzug 8 gebildet werden. Das jeweilige Zugmittel 8.1, 8.2 dient in der zweiten Ausführungsform gemäß Fig. 1 und Fig. 2 nicht nur dazu, die beiden Greiferfinger 2.1, 2.2 zum Schließen des Greifers 1 gegeneinander zu bewegen, sondern dient auch dazu, den jeweiligen Greiferfinger 2.1, 2.2 zu krümmen, indem das jeweilige Zugmittel 8.1, 8.2 an zugeordneten Umlenkmitteln 30 je Greiferfinger 2.1, 2.2, wie beispielsweise Umlenkstäben oder Umlenkrollen, um 90 Grad umgelenkt werden und entlang der Längserstreckung der Greiferfinger 2.1, 2.2 bis zu dem jeweiligen Fingerspitzenglied 7.7 geführt und erst dort festgelegt ist.

Aufgrund der Wellendurchgangsbohrung 29, durch welche der Seilzug 8 lose hindurchgeführt ist (Fig. 2) und aufgrund der an den Fingerspitzengliedern 7.7 festgelegten Enden der Zugmittel 8.1, 8.2 werden die beiden Zugmittel 8.1, 8.2 auf der Mantelwand 18.2 der Welle 17.2 aufgewickelt und insoweit die Zugmittel 8.1, 8.2 verkürzt und die beiden Greiferfinger 2.1, 2.2 sowohl aufeinander zu bewegt und somit der Greifer 1 geschlossen, als auch die Greiferfinger 2.1, 2.2 gegebenenfalls gekrümmt, indem das Zugmittel 8.1, 8.2 über das Umlenkmittel 30 hinweggeführt an dem jeweiligen Fingerspitzenglied 7.7 zieht, so dass die Fingerglieder 7 sich verdrehen und den Greiferfinger 2.1, 2.2 krümmen.

Die Wellendurchgangsbohrung 29 kann mit einer randoffenen Aussparung 31 ausgebildet sein, so dass ein Mittenabschnitt des Seilzugs 8 in einer radialen Zuführungsrichtung von außerhalb der Mantelwand der Welle 17.2 in die Wellendurchgangsbohrung 29 eingehängt werden kann.

Wenn die Greiferfinger 2.1, 2.2 vollständig geöffnet sind, kann vorgesehen sein, dass der Seilzug 8 getreckt durch die Wellendurchgangsbohrung 29 läuft, ohne dass der Seilzug 8 in dieser vollständig geöffneten Stellung der Greiferfinger 2.1, 2.2 die Mantelwand 18.2 der Welle 17.2 umwickelt. In diesem Zustand kann sich der Seilzug 8 dann relativ zur Welle 17.2 wieder selbsttätig mittig ausrichten, falls unerwünschte Nebeneffekte, beispielsweise aufgrund unsymmetrisch wirkender Reibungseffekte, dazu führten, dass die beiden Greiferfinger 2.1, 2.2 unterschiedlich betätigt wurden, d.h. die beiden Zugmittel 8.1, 8.2 unterschiedlich aufgewickelt wurden.

Das eine Zugmittel 8.1 kann an einer ersten Anlenkungsstelle 20.1 an dem einen Greiferfinger 2.1 angekoppelt sein und das andere Zugmittel 8.2 an einer zweiten Anlenkungsstelle 20.2 (Fig. 1) an dem anderen Greiferfinger 2.2 angekoppelt sein, derart, dass die beiden Anlenkungsstellen 20.1, 20.2 auf gleicher Höhe liegen, und die Zugmittel 8.1, 8.2 an dem Seilzugbetätigungsmittel 16 auf einer anderen Höhe angebunden sind, welche näher an dem Greifergrundkörper 3 liegt, als die erste Anlenkungsstelle 20.1 und die zweite Anlenkungsstelle 20.2.

Die Anbindungsstelle, an welcher die Zugmittel 8.1, 8.2 an dem Seilzugbetätigungsmittel 16 auf derselben Höhe angebunden sind, kann durch eine geschlossene Wellendurchgangsbohrung (nicht dargestellt) oder durch die randoffene Wellendurchgangsbohrung 29 gebildet werden.

Indem das eine Zugmittel 8.1 an einer ersten Anlenkungsstelle 20.1 an dem einen Greiferfinger 2.1 angekoppelt ist und das andere Zugmittel 8.2 an einer zweiten Anlenkungsstelle 20.2 an dem anderen Greiferfinger 2.2 angekoppelt ist, derart, dass die beiden Anlenkungsstellen 20.1, 20.2 auf gleicher Höhe liegen, und die Zugmittel 8.1, 8.2 an dem Seilzugbetätigungsmittel 16 auf einer niedrigeren Höhe angebunden sind, welche näher an dem Greifergrundkörper 3 liegt, als die erste Anlenkungsstelle 20.1 und die zweite Anlenkungsstelle 20.2, wird zunächst bei einer beginnenden Schließbewegung des Greifers 1 sichergestellt, dass die Zugmittel 8.1, 8.2 schräg nach unten in Richtung des Zentrums des Greifers 1, also in Richtung des Seilzugbetätigungsmittels 16 ausgerichtet sind, so dass eine durch den Antriebsmotor 4 veranlasste Zugkraft, die durch die Zugmittel 8.1, 8.2 läuft, an der jeweiligen Anlenkungsstelle 20 des Greiferfingers 2.1, 2.2 eine in Richtung des Greifergrundkörpers 3 weisende Kraftkomponente aufweist. Gleichzeitig wird dadurch sichergestellt, dass die Zugmittel 8.1, 8.2 sich ausgehend von der geschlossenen Wellendurchgangsbohrung 19 oder ausgehend von der randoffenen Wellendurchgangsbohrung 29 des Seilzugbetätigungsmittels 16 in einer vom Greifergrundkörper 3 wegführenden Richtung auf die Welle 17.1 oder die Welle 17.2 aufwickelt, also in Richtung des freien Endes der Welle 17.1 oder der Welle 17.2 aufwickelt.

Der Antriebsmotor 4 kann in einer am Greifergrundkörper 3 ausgebildeten Aufnahmetasche 32 angeordnet sein, derart, dass sich im aufgenommenen Zustand des Antriebsmotors 4 in der Aufnahmetasche 32, die Motorwelle des Antriebsmotors 4 zentral entlang einer Symmetrieachse des Greifers 1 aus dem Greifergrundkörper 3 heraus in Richtung des Greifspaltes des Greifers 1 erstreckt.

Verschiedene beispielhafte Ausführungen der erfindungsgemäßen umschaltbaren Schaltmittel 24 sind in Fig. 3 bis Fig. 12 dargestellt und im Folgenden näher erläutert.

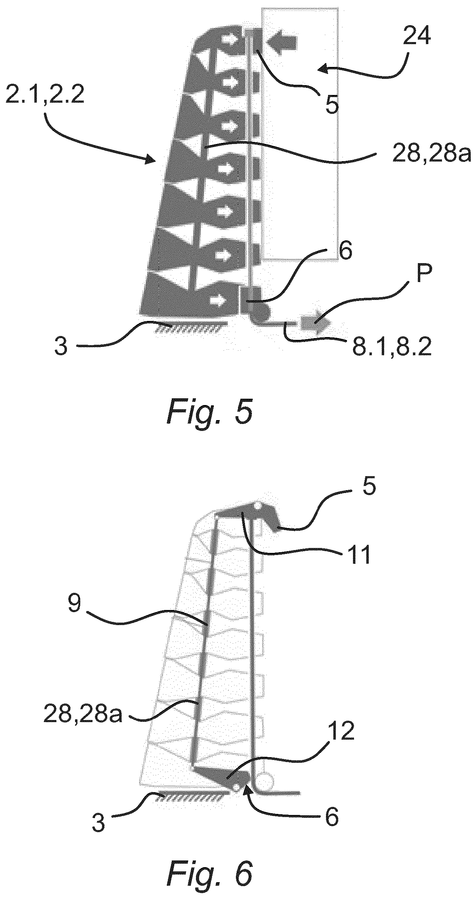

Das Schaltmittel 24 ist generell zwischen einer ersten Schaltstellung (Fig. 3, Fig. 4, Fig. 6, Fig. 8, Fig. 9 und Fig. 11) und einer zweiten Schaltstellung (Fig. 5, Fig. 7, Fig. 10 und Fig. 12) umschaltbar.

In der ersten Schaltstellung ist das Zugmittel 8.1, 8.2 von dem Schaltmittel 24 vollständig freigegeben, so dass durch Ziehen an dem Zugmittel 8.1, 8.2 der am Greifergrundkörper 3 beweglich gelagerte Greiferfinger 2.1, 2.2 sowohl in seine Schließstellung gezogen wird als auch die kinematische Kette der Fingerglieder 7 des beweglich gelagerten Greiferfingers 2.1, 2.2 gekrümmt wird.

In der zweiten Schaltstellung sperrt das Schaltmittel 24 einen entlang der kinematischen Kette der Fingerglieder 7 des beweglich gelagerten Greiferfingers 2.1, 2.2 laufenden Zugmittelabschnitt des Zugmittels 8.1, 8.2, so dass durch Ziehen (Pfeil P) an dem Zugmittel 8.1, 8.2 der am Greifergrundkörper 3 beweglich gelagerte Greiferfinger 2.1, 2.2 lediglich in seine Schließstellung gezogen wird, ohne dass die kinematische Kette der Fingerglieder 7 des beweglich gelagerten Greiferfingers 2.1, 2.2 gekrümmt wird.

Das Schaltmittel 24 kann ein antriebsloses Schaltmittel 24 sein, welches einen am Fingerspitzenglied 7c gelagerten mechanischen Taster 5, eine Zugmittelklemmeinrichtung 6 und ein die Bewegung des mechanischen Tasters 5 auf die Zugmittelklemmeinrichtung 6 übertragendes Kopplungsmittel 9 umfasst, so dass bei einer Betätigung des Tasters 5 die Zugmittelklemmeinrichtung 6 in ihre Klemmstellung bewegt wird, um die zweite Schaltstellung des Schaltmittels 24 einzunehmen.

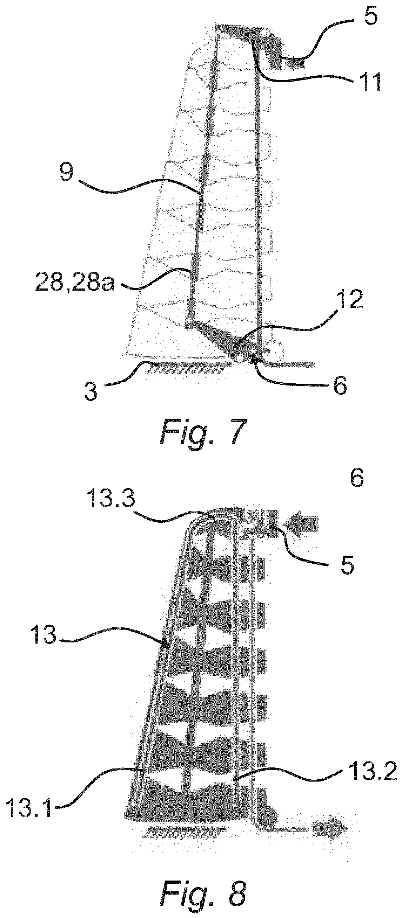

Die Zugmittelklemmeinrichtung 6 ist im Falle der dargestellten Ausführungen der Fig. 3 bis Fig. 7 an dem Fingerwurzelglied 7a ausgebildet und ist demgemäß eingerichtet, in ihrer Klemmstellung (Fig. 5, Fig. 7) das durch das Fingerwurzelglied 7a führende Zugmittel 8.1, 8.2 in der zweiten Schaltstellung des Schaltmittels 24, d.h. im vorliegenden Fall des Tasters 5, an dem Fingerwurzelglied 7a zu arretieren.

Der mechanische Taster 5 ist im Falle des Ausführungsbreispiels gemäß Fig. 6 und Fig. 7 an dem Fingerspitzenglied 7c schwenkbar gelagert und weist einen ersten Hebel 11 auf, an dem ein distales Ende des Kopplungsmittels 9 angeschlossen ist und ein proximales Ende des Kopplungsmittels 9 an einem zweiten Hebel 12 angeschlossen ist, der an dem Fingerwurzelglied 7a schwenkbar gelagert ist und die Zugmittelklemmeinrichtung 6 trägt.

Das Kopplungsmittel 9 ist im Falle der Ausführungen gemäß Fig. 8 bis Fig. 13 als ein zweites Zugmittel 10 bzw. als ein Abspannmittel 13 ausgebildet, welches entlang der kinematischen Kette der Fingerglieder 7 des beweglich gelagerten Greiferfingers 2.1, 2.2 im Bereich einer neutralen Biegefaser 28a des Greiferfingers 2.1, 2.2 vom Fingerspitzenglied 7c zum Fingerwurzelglied 7a geführt ist.

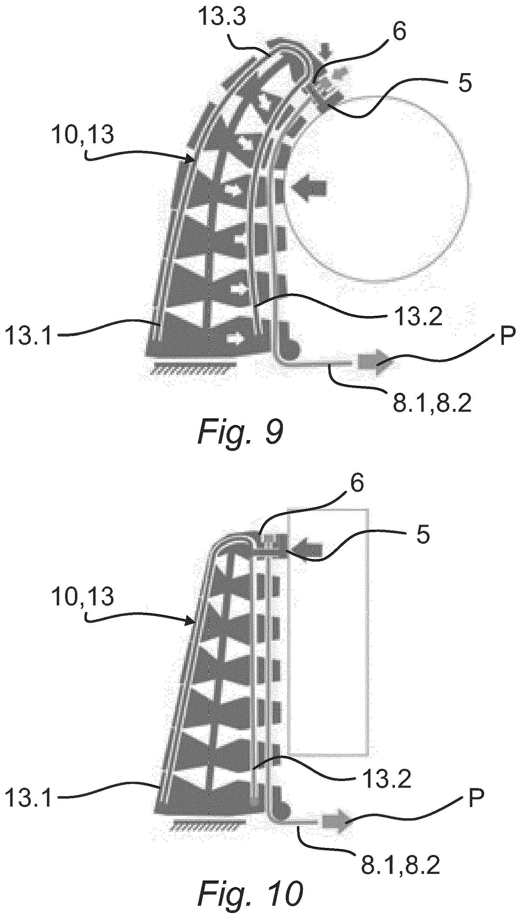

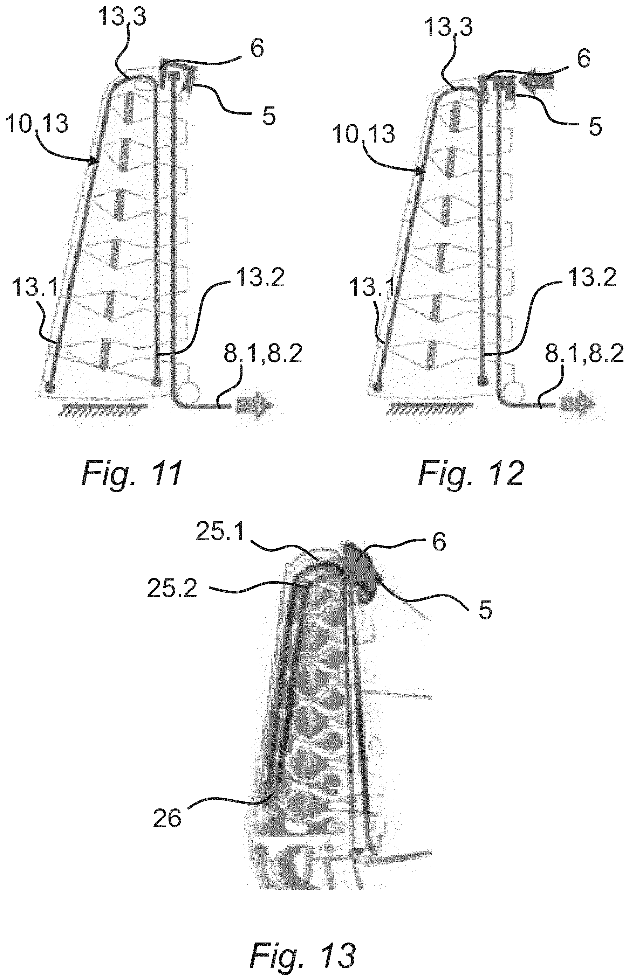

Die Zugmittelklemmeinrichtung 6 ist in diesen Ausführungen an dem Fingerspitzenglied 7c ausgebildet und dazu eingerichtet, in ihrer Klemmstellung (Fig. 10, Fig. 12) das durch das Fingerspitzenglied 7c laufendes Abspannmittel 13 in der zweiten Schaltstellung des Schaltmittels 24 an dem Fingerspitzenglied 7c zu arretieren.

Das Abspannmittel 13 kann einen am Fingerwurzelglied 7a auf der konvexen Seite der neutralen Biegefaser 28a der kinematischen Kette der Fingerglieder 7 des beweglich gelagerten Greiferfingers 2.1, 2.2 verankerten ersten Endabschnitt 13.1 aufweisen, einen am Fingerwurzelglied 7a auf der konkaven Seite der neutralen Biegefaser 28a der kinematischen Kette der Fingerglieder 7 des beweglich gelagerten Greiferfingers 2.1, 2.2 verankerten zweiten Endabschnitt 13.2 aufweisen und einen vom ersten Endabschnitt 13.1 am Fingerwurzelglied 7a auf der konkaven Seite des Greiferfingers 2.1, 2.2 bis an das Fingerspitzenglied 7c geführten und von dem Fingerspitzenglied 7c auf der konkaven Seite des Greiferfingers 2.1, 2.2 wieder zum Fingerwurzelglied 7a zurück geführten Mittenabschnitt 13.3 aufweisen, der an dem zweiten Endabschnitt 13.2 am Fingerwurzelglied 7a endet.

Der durch das Fingerspitzenglied 7c geführte Mittenabschnitt 13.3 des Abspannmittels 13 kann in der ersten Schaltstellung des Schaltmittels 24 (Fig. 9, Fig. 11) zum Durchlaufen des Abspannmittels 13 durch das Fingerspitzenglied 7c freigegeben sein und in der zweiten Schaltstellung des Schaltmittels 24 (Fig. 10, Fig. 12) kann das Abspannmittel 13 durch die Zugmittelklemmeinrichtung 6 in dem Fingerspitzenglied 7c festgelegt sein.

In der Abwandlung gemäß Fig. 13 ist das Abspannmittel 13 ausgehend von dem Fingerwurzelglied 7a von einer Innenseite des Greiferfingers 2.1, 2.2 über eine erste Umlenkung 25.1 im Fingerspitzenglied 7c auf die Außenseite des Greiferfingers 2.1, 2.2 geführt und mittels einer am Fingerwurzelglied 7a ausgebildeten zweiten Umlenkung 25.2 von der Außenseite des Greiferfingers 2.1, 2.2 wieder an die Innenseite des Greiferfingers 2.1, 2.2 bis an das Fingerwurzelglied 7a zurückgeführt.

## Patentansprüche

1. Greifer, aufweisend einen Greifergrundkörper (3), wenigstens zwei Greiferfinger (2.1,2.2), von denen wenigstens einer an dem Greifergrundkörper (3) beweglich gelagert ist, und wenigstens einen Antriebsmotor (4), der ausgebildet ist zum Bewegen des wenigstens einen ihm zugeordneten, am Greifergrundkörper (3) beweglich gelagerten Greiferfingers (2.1, 2.2), wobei der wenigstens eine an dem Greifergrundkörper (3) beweglich gelagerte Greiferfinger (2.1, 2.2) eine kinematische Kette von mehreren aufeinander folgenden, gegeneinander verstellbar gelagerten Fingergliedern (7) aufweist, wobei ein in der kinematischen Kette proximales Fingerglied (7.1) ein Fingerwurzelglied (7a) bildet und ein in der kinematischen Kette distales Fingerglied (7.7) ein Fingerspitzenglied (7c) bildet, und wenigstens ein sich entlang der kinematischen Kette der jeweiligen Fingerglieder (7) längserstreckendes Zugmittel (8.1, 8.2) vorgesehen ist, das mit dem Fingerspitzenglied (7c) verbunden ist und das ausgebildet ist zum Bewegen des am Greifergrundkörper (3) beweglich gelagerten Greiferfingers (2.1, 2.2) aus einer Offenstellung in eine Schließstellung des beweglich gelagerten Greiferfingers (2.1, 2.2) und zum Krümmen der kinematischen Kette der Fingerglieder (7) des beweglich gelagerten Greiferfingers (2.1, 2.2) durch Ziehen an dem Zugmittel (8.1, 8.2), **dadurch gekennzeichnet, dass** der Greifer (1) ein zwischen einer ersten Schaltstellung und einer zweiten Schaltstellung umschaltbares Schaltmittel (24) aufweist, welches in der ersten Schaltstellung das Zugmittel (8.1, 8.2) vollständig freigibt, so dass durch Ziehen an dem Zugmittel (8.1, 8.2) der am Greifergrundkörper (3) beweglich gelagerte Greiferfinger (2.1, 2.2) sowohl in seine Schließstellung gezogen wird, als auch die kinematische Kette der Fingerglieder (7) des beweglich gelagerten Greiferfingers (2.1, 2.2) gekrümmt wird, und welches in der zweiten Schaltstellung einen entlang der kinematischen Kette der Fingerglieder (7) des beweglich gelagerten Greiferfingers (2.1, 2.2) laufenden Zugmittelabschnitt des Zugmittels (8.1, 8.2) sperrt, so dass durch Ziehen an dem Zugmittel (8.1, 8.2) der am Greifergrundkörper (3) beweglich gelagerte Greiferfinger (2.1, 2.2) lediglich in seine Schließstellung gezogen wird, ohne dass die kinematische Kette der Fingerglieder (7) des beweglich gelagerten Greiferfingers (2.1, 2.2) gekrümmt wird.

2. Greifer nach Anspruch 1, **dadurch gekennzeichnet, dass** das Schaltmittel (24) ein antriebsloses Schaltmittel (24) ist, welches einen am Fingerspitzenglied (7c) gelagerten mechanischen Taster (5), eine Zugmittelklemmeinrichtung (6) und ein die Bewegung des mechanischen Tasters (5) auf die Zugmittelklemmeinrichtung (6) übertragendes Kopplungsmittel (9) umfasst, so dass bei einer Betätigung des Tasters (5) die Zugmittelklemmeinrichtung (6) in ihre Klemmstellung bewegt wird, um die zweite Schaltstellung des Schaltmittels (24) einzunehmen.

3. Greifer nach Anspruch 2, **dadurch gekennzeichnet, dass** die Zugmittelklemmeinrichtung (6) an dem Fingerwurzelglied (7a) ausgebildet ist und eingerichtet ist, in ihrer Klemmstellung das durch das Fingerwurzelglied (7a) führende Zugmittel (8.1, 8.2) in der zweiten Schaltstellung des Schaltmittels (24) an dem Fingerwurzelglied (7a) zu arretieren.

4. Greifer nach Anspruch 3, **dadurch gekennzeichnet, dass** der mechanische Taster (5) an dem Fingerspitzenglied (7c) schwenkbar gelagert ist und einen ersten Hebel (11) aufweist, an dem ein distales Ende des Kopplungsmittels (9) angeschlossen ist und ein proximales Ende des Kopplungsmittels (9) an einem zweiten Hebel (12) angeschlossen ist, der an dem Fingerwurzelglied (7a) schwenkbar gelagert ist und die Zugmittelklemmeinrichtung (6) trägt.

5. Greifer nach Anspruch 4, **dadurch gekennzeichnet, dass** das Kopplungsmittel (9) als ein zweites Zugmittel (10) ausgebildet ist, welches entlang der kinematischen Kette der Fingerglieder (7) des beweglich gelagerten Greiferfingers (2.1, 2.2) im Bereich einer neutralen Biegefaser (28a) des Greiferfingers (2.1, 2.2) vom Fingerspitzenglied (7c) zum Fingerwurzelglied (7a) geführt ist.

6. Greifer nach Anspruch 2, **dadurch gekennzeichnet, dass** die Zugmittelklemmeinrichtung (6) an dem Fingerspitzenglied (7c) ausgebildet ist und eingerichtet ist, in ihrer Klemmstellung ein durch das Fingerspitzenglied (7c) laufendes Abspannmittel (13) in der zweiten Schaltstellung des Schaltmittels (24) an dem Fingerspitzenglied (7c) zu arretieren.

7. Greifer nach Anspruch 6, **dadurch gekennzeichnet, dass** das Abspannmittel (13) einen am Fingerwurzelglied (7a) auf der konvexen Seite der neutralen Biegefaser (28a) der kinematischen Kette der Fingerglieder (7) des beweglich gelagerten Greiferfingers (2.1, 2.2) verankerten ersten Endabschnitt (13.1) aufweist, einen am Fingerwurzelglied (7a) auf der konkaven Seite der neutralen Biegefaser (28a) der kinematischen Kette der Fingerglieder (7) des beweglich gelagerten Greiferfingers (2.1, 2.2) verankerten zweiten Endabschnitt (13.2) aufweist und einen vom ersten Endabschnitt (13.1) am Fingerwurzelglied (7a) auf der konkaven Seite des Greiferfingers (2.1, 2.2) bis an das Fingerspitzenglied (7c) geführten und von dem Fingerspitzenglied (7c) auf der konkaven Seite des Greiferfingers (2.1, 2.2) wieder zum Fingerwurzelglied (7a) zurück geführten Mittenabschnitt (13.3) aufweist, der an dem zweiten Endabschnitt (13.2) am Fingerwurzelglied (7a) endet.

8. Greifer nach Anspruch 7, **dadurch gekennzeichnet, dass** der durch das Fingerspitzenglied (7c) geführte Mittenabschnitt (13.3) des Abspannmittels (13) in der ersten Schaltstellung des Schaltmittels (24) zum Durchlaufen des Abspannmittels (13) durch das Fingerspitzenglied (7c) freigegeben ist und in der zweiten Schaltstellung des Schaltmittels (24) das Abspannmittel (13) durch die Zugmittelklemmeinrichtung (6) in dem Fingerspitzenglied (7c) festgelegt ist.

9. Greifer nach Anspruch 8, **dadurch gekennzeichnet, dass** das Abspannmittel (13) ausgehend von dem Fingerwurzelglied (7a) von einer Innenseite des Greiferfingers (2.1, 2.2) über eine Umlenkung (25.1, 25.2) im Fingerspitzenglied (7c) auf die Außenseite des Greiferfingers (2.1, 2.2) geführt und mittels einer am Fingerwurzelglied (7a) ausgebildeten weiteren Umlenkung (26) von der Außenseite des Greiferfingers (2.1, 2.2) wieder an die Innenseite des Greiferfingers (2.1, 2.2) bis an das Fingerwurzelglied (7a) zurückgeführt ist.

10. Greifer nach einem der Ansprüche 1 bis 9, **dadurch gekennzeichnet, dass** der am Greifergrundkörper (3) beweglich gelagerte Greiferfinger (2.1, 2.2) linear verschiebbar an dem Greifergrundkörper (3) gelagert ist, und ein lineares Verstellen des Greiferfingers (2.1, 2.2) relativ zum Greifergrundkörper (3) erfolgt, wenn an dem Zugmittel (8.1, 8.2) des beweglich gelagerten Greiferfingers (2.1, 2.2) gezogen wird, und/oder der am Greifergrundkörper (3) beweglich gelagerte Greiferfinger (2.1, 2.2) schwenkbar an dem Greifergrundkörper (3) gelagert ist, und ein schwenkendes Verstellen des Greiferfingers (2.1, 2.2) relativ zum Greifergrundkörper (3) erfolgt, wenn an dem Zugmittel (8.1, 8.2) des beweglich gelagerten Greiferfingers (2.1, 2.2) gezogen wird.

## Claims

1. Gripper having a gripper main body (3), having at least two gripper fingers (2.1, 2.2), of which at least one is mounted movably on the gripper main body (3), and having at least one drive motor (4) configured for moving the at least one gripper finger (2.1, 2.2) mounted movably on the gripper main body (3), which is assigned thereto, wherein the at least one gripper finger (2.1, 2.2) mounted movably on the gripper main body (3) has a kinematic chain of multiple successive finger members (7) which are mounted so as to be adjustable in relation to one another, wherein a proximal finger member (7.1) in the kinematic chain forms a finger-root member (7a) and a distal finger member (7.7) in the kinematic chain forms a fingertip member (7c), and provision is made of at least one pulling means (8.1, 8.2) which extends longitudinally along the kinematic chain of the respective finger members (7) and is connected to the fingertip member (7c) and is configured for moving the gripper finger (2.1, 2.2) mounted movably on the gripper main body (3) from an open position into a closed position of the movably mounted gripper finger (2.1, 2.2) and for curving the kinematic chain of the finger members (7) of the movably mounted gripper finger (2.1, 2.2) by pulling on the pulling means (8.1, 8.2), **characterized in that** the gripper (1) has a switching means (24) which is switchable between a first switching position and a second switching position and which, in the first switching position, releases the pulling means (8.1, 8.2) completely, so that pulling on the pulling means (8.1, 8.2) results both in the gripper finger (2.1, 2.2) mounted movably on the gripper main body (3) being pulled into its closed position and in the kinematic chain of the finger members (7) of the movably mounted gripper finger (2.1, 2.2) being curved, and which, in the second switching position, blocks a pulling-means portion of the pulling means (8.1, 8.2) running along the kinematic chain of the finger members (7) of the movably mounted gripper finger (2.1, 2.2), so that pulling on the pulling means (8.1, 8.2) results in the gripper finger (2.1, 2.2) mounted movably on the gripper main body (3) merely being pulled into its closed position without the kinematic chain of the finger members (7) of the movably mounted gripper finger (2.1, 2.2) being curved.

2. Gripper according to Claim 1, **characterized in that** the switching means (24) is a drive-free switching means (24) comprising a mechanical button (5), which is mounted on the fingertip member (7c), a pulling-means clamping device (6) and a coupling means (9), which transmits the movement of the mechanical button (5) to the pulling-means clamping device (6), so that, when the button (5) is actuated, the pulling-means clamping device (6) is moved into its clamping position in order for the second switching position of the switching means (24) to be assumed.

3. Gripper according to Claim 2, **characterized in that** the pulling-means clamping device (6) is formed at the finger-root member (7a) and is configured to arrest, in its clamping position, the pulling means (8.1, 8.2) leading through the finger-root member (7a) in the second switching position of the switching means (24) at the finger-root member (7a).

4. Gripper according to Claim 3, **characterized in that** the mechanical button (5) is mounted pivotably on the fingertip member (7c) and has a first lever (11) to which a distal end of the coupling means (9) is connected, and a proximal end of the coupling means (9) is connected to a second lever (12) which is mounted pivotably on the finger-root member (7a) and supports the pulling-means clamping device (6).

5. Gripper according to Claim 4, **characterized in that** the coupling means (9) is in the form of a second pulling means (10) which is guided from the fingertip member (7c) to the finger-root member (7a) along the kinematic chain of the finger members (7) of the movably mounted gripper finger (2.1, 2.2) in the region of a neutral bent fibre (28a) of the gripper finger (2.1, 2.2).

6. Gripper according to Claim 2, **characterized in that** the pulling-means clamping device (6) is formed at the fingertip member (7c) and is configured to arrest, in its clamping position, a bracing means (13) running through the fingertip member (7c) in the second switching position of the switching means (24) at the fingertip member (7c).

7. Gripper according to Claim 6, **characterized in that** the bracing means (13) has a first end portion (13.1) which is anchored to the finger-root member (7a) on the convex side of the neutral bent fibre (28a) of the kinematic chain of the finger members (7) of the movably mounted gripper finger (2.1, 2.2), has a second end portion (13.2) which is anchored to the finger-root member (7a) on the concave side of the neutral bent fibre (28a) of the kinematic chain of the finger members (7) of the movably mounted gripper finger (2.1, 2.2), and has a middle portion (13.3) which is guided from the first end portion (13.1) at the finger-root member (7a) on the concave side of the gripper finger (2.1, 2.2) as far as the fingertip member (7c) and from the fingertip member (7c) on the concave side of the gripper finger (2.1, 2.2) back to the finger-root member (7a) again, said middle portion ending at the finger-root member (7a) at the second end portion (13.2).

8. Gripper according to Claim 7, **characterized in that**, in the first switching position of the switching means (24), the middle portion (13.3) of the bracing means (13) guided through the fingertip member (7c) is released for passage of the bracing means (13) through the fingertip member (7c) and, in the second switching position of the switching means (24), the bracing means (13) is fixed in the fingertip member (7c) by the pulling-means clamping device (6).

9. Gripper according to Claim 8, **characterized in that** the bracing means (13), proceeding from the finger-root member (7a), is guided from an inner side of the gripper finger (2.1, 2.2) to the outer side of the gripper finger (2.1, 2.2) via a diversion (25.1, 25.2) in the fingertip member (7c) and, by means of a further diversion (26) formed at the finger-root member (7a), is guided from the outer side of the gripper finger (2.1, 2.2) back to the inner side of the gripper finger (2.1, 2.2) as far as the finger-root member (7a).

10. Gripper according to one of Claims 1 to 9, **characterized in that** the gripper finger (2.1, 2.2) mounted movably on the gripper main body (3) is mounted in a linearly displaceable manner on the gripper main body (3) and a linear adjustment of the gripper finger (2.1, 2.2) relative to the gripper main body (3) is realized if the pulling means (8.1, 8.2) of the movably mounted gripper finger (2.1, 2.2) is pulled, and/or the gripper finger (2.1, 2.2) mounted movably on the gripper main body (3) is mounted in a pivotable manner on the gripper main body (3) and a pivoting adjustment of the gripper finger (2.1, 2.2) relative to the gripper main body (3) is realized if the pulling means (8.1, 8.2) of the movably mounted gripper finger (2.1, 2.2) is pulled.

## Revendications

1. Système de préhension, comportant un corps de base (3) de système de préhension, au moins deux doigts (2.1, 2.2) de système de préhension, dont au moins un est monté de manière mobile sur le corps de base (3) de système de préhension, et au moins un moteur d'entraînement (4), qui est formé pour déplacer l'au moins un doigt (2.1, 2.2) de système de préhension associé à celui-ci et monté de manière mobile sur le corps de base (3) de système de préhension, l'au moins un doigt (2.1, 2.2) de système de préhension monté de manière mobile sur le corps de base (3) de système de préhension comportant une chaîne cinématique de plusieurs organes (7) de doigt se suivant les uns les autres, montés de manière à pouvoir être ajustés les uns à l'encontre des autres, un organe (7.1) de doigt proximal dans la chaîne cinématique formant un élément de racine (7a) de doigt et un élément (7.7) de doigt distal dans la chaîne cinématique formant un élément de pointe (7c) de doigt, et au moins un moyen de traction (8.1, 8.2) s'étendant longitudinalement le long de la chaîne cinématique des éléments (7) de doigt respectifs étant prévu, qui est relié à l'élément de pointe (7c) de doigt et qui est formé pour déplacer le doigt (2.1, 2.2) de système de préhension monté de manière mobile sur le corps de base (3) de système de préhension depuis une position ouverte dans une position de fermeture du doigt (2.1, 2.2) de système de préhension monté de manière mobile et pour plier la chaîne cinématique des éléments (7) de doigt du doigt (2.1, 2.2) de système de préhension monté de manière mobile en tirant sur le moyen de traction (8.1, 8.2), **caractérisé en ce que** le système de préhension (1) comporte un moyen de commutation (24) pouvant être commuté entre une première position de commutation et une deuxième position de commutation, lequel libère totalement le moyen de traction (8.1, 8.2) dans la première position de commutation de telle sorte qu'en tirant sur le moyen de traction (8.1, 8.2), à la fois le doigt (2.1, 2.2) de système de préhension monté de manière mobile sur le corps de base (3) de système de préhension est tiré dans sa position de fermeture et la chaîne cinématique des éléments (7) de doigt du doigt (2.1, 2.2) de système de préhension monté de manière mobile est également pliée, et lequel, dans la deuxième position de commutation, bloque une section de moyen de traction du moyen de traction (8.1, 8.2) s'étendant le long de la chaîne cinématique des éléments (7) de doigt du doigt (2.1, 2.2) de système de préhension monté de manière mobile de telle sorte qu'en tirant sur le moyen de traction (8.1, 8.2), le doigt (2.1, 2.2) de système de préhension monté de manière mobile sur le corps de base (3) de système de préhension est tiré seulement dans sa position de fermeture sans que la chaîne cinématique des éléments (7) de doigt du doigt (2.1, 2.2) de système de préhension monté de manière mobile ne soit pliée.

2. Système de préhension selon la revendication 1, **caractérisé en ce que** le moyen de commutation (24) est un moyen de commutation (24) sans entraînement, lequel comprend un bouton (5) mécanique monté sur l'élément de pointe (7c) de doigt, un dispositif de serrage (6) de moyen de traction et un moyen de couplage (9) transmettant le déplacement du bouton (5) mécanique sur le dispositif de serrage (6) de moyen de traction de telle sorte que lors d'un actionnement du bouton (5), le dispositif de serrage (6) de moyen de traction est déplacé dans sa position de serrage pour prendre la deuxième position de commutation du moyen de commutation (24).

3. Système de préhension selon la revendication 2, **caractérisé en ce que** le dispositif de serrage (6) de moyen de traction est formé sur l'élément de racine (7a) de doigt et est mis au point pour, dans sa position de serrage, arrêter le moyen de traction (8.1, 8.2) menant à travers l'élément de racine (7a) de doigt sur l'élément de racine (7a) de doigt dans la deuxième position de commutation du moyen de commutation (24).

4. Système de préhension selon la revendication 3, **caractérisé en ce que** le bouton (5) mécanique est monté de manière à pouvoir pivoter sur l'élément de pointe (7c) de doigt et comporte un premier levier (11), auquel une extrémité distale du moyen de couplage (9) est raccordée et une extrémité proximale du moyen de couplage (9) est raccordée à un deuxième levier (12), qui est monté de manière à pouvoir pivoter sur l'élément de racine (7a) de doigt et supporte le dispositif de serrage (6) de moyen de traction.

5. Système de préhension selon la revendication 4, **caractérisé en ce que** le moyen de couplage (9) est formé comme un deuxième moyen de traction (10), lequel est guidé depuis l'élément de pointe (7c) de doigt vers l'élément de racine (7a) de doigt dans la zone d'une fibre de flexion (28a) neutre du doigt (2.1, 2.2) de système de préhension le long de la chaîne cinématique des éléments (7) de doigt du doigt (2.1, 2.2) de système de préhension monté de manière mobile.

6. Système de préhension selon la revendication 2, **caractérisé en ce que** le dispositif de serrage (6) de moyen de traction est formé sur l'élément de pointe (7c) de doigt et est mis au point pour, dans sa position de serrage, arrêter un moyen de haubanage (13) s'étendant à travers l'élément de pointe(7c) de doigt sur l'élément de pointe (7c) de doigt dans la deuxième position de commutation du moyen de commutation (24).

7. Système de préhension selon la revendication 6, **caractérisé en ce que** le moyen de haubanage (13) comporte une première section d'extrémité (13.1) ancrée sur l'élément de racine (7a) de doigt sur le côté convexe de la fibre de flexion (28a) neutre de la chaîne cinématique des éléments (7) de doigt du doigt (2.1, 2.2) de système de préhension monté de manière mobile, comporte une seconde section d'extrémité (13.2) ancrée sur l'élément de racine (7a) de doigt sur le côté concave de la fibre de flexion (28a) neutre de la chaîne cinématique des éléments (7) de doigt du doigt (2.1, 2.2) de système de préhension monté de manière mobile et comporte une section centrale (13.3) guidée depuis la première section d'extrémité (13.1) sur l'élément de racine (7a) de doigt sur le côté concave du doigt (2.1, 2.2) de système de préhension jusqu'à l'élément de pointe (7c) de doigt et ramenée vers l'élément de racine (7a) de doigt depuis l'élément de pointe (7c) de doigt sur le côté concave du doigt (2.1, 2.2) de système de préhension, qui se termine sur l'élément de racine (7a) de doigt sur la seconde section d'extrémité (13.2).

8. Système de préhension selon la revendication 7, **caractérisé en ce que** la section centrale (13.3), guidée à travers l'élément de pointe (7c) de doigt, du moyen de haubanage (13) est libérée par l'élément de pointe (7c) de doigt pour traverser le moyen de haubanage (13) dans la première position de commutation du moyen de commutation (24) et, dans la deuxième position de commutation du moyen de commutation (24), le moyen de haubanage (13) est fixé par le dispositif de serrage (6) de moyen de traction dans l'élément de pointe (7c) de doigt.

9. Système de préhension selon la revendication 8, **caractérisé en ce que** le moyen de haubanage (13) est guidé en partant de l'élément de racine (7a) de doigt depuis un côté intérieur du doigt (2.1, 2.2) de système de préhension par un renvoi (25.1, 25.2) dans l'élément de pointe (7c) de doigt sur le côté extérieur du doigt (2.1, 2.2) de système de préhension et est ramené au moyen d'un autre renvoi (26) formé sur l'élément de racine (7a) de doigt, depuis le côté extérieur du doigt (2.1, 2.2) de système de préhension sur le côté intérieur du doigt (2.1, 2.2) de système de préhension jusque sur l'élément de racine (7a) de doigt.

10. Système de préhension selon l'une des revendications 1 à 9, **caractérisé en ce que** le doigt (2.1, 2.2) de système de préhension monté de manière mobile sur le corps de base (3) de système de préhension est monté de manière à pouvoir être coulissé linéairement sur le corps de base (3) de système de préhension, et un ajustement linéaire du doigt (2.1, 2.2) de système de préhension est effectué par rapport au corps de base (3) de système de préhension lorsqu'une traction est effectuée sur le moyen de traction (8.1, 8.2) du doigt (2.1, 2.2) de système de préhension monté de manière mobile, et/ou le doigt (2.1, 2.2) de système de préhension monté de manière mobile sur le corps de base (3) de système de préhension est monté de manière à pouvoir pivoter sur le corps de base (3) de système de préhension, et un ajustement par pivotement du doigt (2.1, 2.2) de système de préhension est effectué par rapport au corps de base (3) de système de préhension lorsqu'une traction est effectuée sur le moyen de traction (8.1, 8.2) du doigt (2.1, 2.2) de système de préhension monté de manière mobile.
